# EUROPÄISCHE PATENTSCHRIFT

(11) **EP 2 545 430 B1**
(45) Veröffentlichungstag und Bekanntmachung des Hinweises auf die Patenterteilung: **21.02.2018**
(21) Anmeldenummer: 11707796.6
(22) Anmeldetag: 28.02.2011
(51) Int. Cl.: G06F 3/048, B60H 1/00, B60K 37/06, G06F 3/0488, G06F 3/0481, G06F 3/0484

(54) **VERFAHREN UND VORRICHTUNG ZUM BETREIBEN EINER BENUTZERSCHNITTSTELLE**
METHOD AND DEVICE FOR OPERATING A USER INTERFACE
MÉTHODE ET DISPOSITIF POUR OPERER UNE INTERFACE UTILISATEUR

(30) Priorität: 11.03.2010 DE 102010011039
(43) Veröffentlichungstag der Anmeldung: 16.01.2013
(73) Patentinhaber: Volkswagen Aktiengesellschaft, 38440 Wolfsburg (DE)
(72) Erfinder: WÄLLER, Christoph, 38106 Braunschweig (DE)
(86) Internationale Anmeldenummer: PCT/EP2011/000963
(87) Internationale Veröffentlichungsnummer: WO 2011/110294

(56) Entgegenhaltungen:
- EP-A2- 1 977 926
- DE-A1-102007 034 272
- DE-A1-102008 017 051
- DE-A1-102008 034 507
- JP-A- 2005 071 286

## Beschreibung

Die vorliegende Erfindung betrifft ein Verfahren zum Betreiben einer Benutzerschnittstelle, bei dem zumindest ein flächiges, graphisches Objekt in einer ersten Darstellung, welche eine erste Seite des Objekts zeigt, und in einer zweiten Darstellung, welche die zweite Seite des Objekts zeigt, auf einer Anzeigefläche dargestellt wird, wobei auf unterschiedlichen Seiten des Objekts verschiedene Informationen dargestellt werden und die Darstellung des graphischen Objekts so verändert wird, dass sich das graphische Objekt bei einer perspektivischen Darstellung auf der Anzeigefläche von der ersten Seite auf die zweite Seite dreht, wenn ein erstes oder ein zweites Steuersignal ausgelöst wurde. Die Erfindung betrifft ferner eine dazugehörige Vorrichtung zum Bereitstellen einer solchen Benutzerschnittstelle.

Das Verfahren eignet sich insbesondere für eine Anzeigefläche in einem Fahrzeug. Es kann jedoch auch in Verbindung mit anderen Anzeigeflächen eingesetzt werden, vor allem wenn eine solche von mehreren Benutzern gleichzeitig bedient wird.

Graphische Benutzerschnittstellen sind insbesondere bei Computern und bei Bediensystemen von elektronischen Einrichtungen bekannt, bei denen sie dem Benutzer die Interaktion mit der Maschine über grafische Symbole, auch als Objekte bezeichnet, erlaubt. Diese Objekte können dabei auf vielfältige Weise gesteuert werden. Sie können beispielsweise mittels manuellen Bedienelementeri wie Tasten, Drehdrückstellern oder einer Maus, über eine berührungsempfindliche Anzeigefläche oder über Gesten, die vor oder auf der Anzeigefläche erfasst und in Steuersignale umgewandelt werden, ausgewählt oder bewegt werden.

Serienfahrzeuge verfügen heute über Funktionseinrichtungen, wie z.B. einer Klimaanlage, die über mechanische Tasten und Drehsteller bedient wird. Aufgrund hoher Variantenvielfalt durch länderspezifische Anforderungen und Ausstattungsvarianten entstehen hierbei große Aufwände in der Planung und Produktion der Bedienmodule. Zudem führt die zunehmende Funktionsvielfalt zu einer Überladung mit Schaltern, so dass diese für den Nutzer nicht mehr verständlich sind, den Zugriff auf wesentlich erachtete Funktionen erschweren und damit die Ablenkungsgefahr vom Straßenverkehr erhöht wird.

Aufgrund dieser Zunahme elektronischer Einrichtungen und deren Funktionsvielfalt in Fahrzeugen ist man inzwischen dazu übergegangen, auch Fahrzeuge mit einem Bediensystem auszustatten, das über eine graphische Benutzerschnittstelle verfügt, um die diversen Bediensysteme des Fahrzeugs, beispielsweise Klimaanlage, Radio, CD-Spieler, Kommunikationseinrichtung oder Navigationssystem, mittels weniger, frei programmierbarer Bedienelemente steuern zu können.

Die DE 10 2008 034 507 A1 beschreibt ein Verfahren zum Anzeigen von Informationen in einem Kraftfahrzeug, bei dem ein angezeigtes flächiges graphisches Objekt von der Vorder- auf die Rückseite gedreht wird. Dabei wird die Darstellung derart gewählt, dass die Anzeigefläche möglichst gut genutzt wird und die dargestellte Information schnell und intuitiv vom Fahrer des Fahrzeugs erfasst werden kann. Dies wird durch ein perspektivisches Drehen des graphischen Objekts erreicht, das dabei im Rahmen der perspektivischen Betrachtung immer vollständig zu sehen ist. Auf der Vorderseite werden Anzeigeinformationen und elementare Einstellmöglichkeiten von Funktionseinrichtungen im Fahrzeug dargestellt, während auf der Rückseite Detaileinstellungen vorgenommen werden können.

Ferner sind in den Druckschriften US 7 315 312 B2, US 7 171 630 B2, US 7 081 882 B2, JP 2000163193 A, EP 1 672 474 A2 und DE 43 01 766 C2 Verfahren zur graphischen Darstellung des Umblätterns von Buchseiten beschrieben, wobei insbesondere auf den Aspekt der naturgetreuen dreidimensionalen Wirkung eingegangen wird.

Es ist die Aufgabe der vorliegenden Erfindung, ein Verfahren und eine Vorrichtung zum Bereitstellen einer graphischen Benutzerschnittstelle der eingangs erwähnten Art anzugeben, die schnell an vielseitige Nutzeranforderungen angepasst werden kann, insbesondere wenn mehrere Nutzer abwechselnd nacheinander über die Benutzerschnittstelle Einstellungen vornehmen.

Diese Aufgabe wird erfindungsgemäß durch ein Verfahren mit den Merkmalen des Anspruchs 1 sowie eine Vorrichtung mit den Merkmalen des Anspruchs 8 gelöst. Vorteilhafte Aus- und Weiterbildungen ergeben sich aus den abhängigen Ansprüchen.

Die Erfindung wird nun anhand von Ausführungsbeispielen mit Bezug zu den Figuren näher erläutert.
Figur 1 zeigt schematisch den Aufbau eines Ausführungsbeispiels der erfindungsgemäßen Vorrichtung zum Bereitstellen einer Benutzerschnittstelle,
die Figuren 2a - 2d zeigen die Darstellung eines graphischen Objekts gemäß einem Ausführungsbeispiel des erfindungsgemäßen Verfahrens nach Auslösen eines ersten Steuersignals,
die Figuren 3a - 3d zeigen die Darstellung eines graphischen Objekts gemäß dem Ausführungsbeispiel des erfmdungsgemäßen Verfahrens nach den Figuren 2a -2d, bei der anstelle des ersten Steuersignals ein zweites Steuersignal ausgelöst wurde,
Figur 4a zeigt die erste Seite eines graphischen Objekts in Form eines Benutzermenüs für eine Klimaanlage gemäß einem Ausführungsbeispiel des erfindungsgemäßen Verfahrens und
Figur 4b zeigt eine zweite Seite des graphischen Objekts aus Figur 4a gemäß einem Ausführungsbeispiel des erfindungsgemäßen Verfahrens.

Das erfindungsgemäße Verfahren ist dadurch gekennzeichnet, dass nach einer Drehung von der ersten Seite auf die zweite Seite in Abhängigkeit davon, ob das erste oder zweite Steuersignal ausgelöst wurde, verschiedene Informationen auf der zweiten Seite dargestellt werden. Die auf der ersten Seite dargestellte Information ist typischerweise eine Teilmenge einer Gesamtinformation. Durch die Merkmale des Steuersignals kann gezielt zu der Information auf der ersten Seite eine andere Teilmenge der Gesamtinformation auf der zweiten Seite angezeigt werden, wobei diese Teilmenge durch das Steuersignal bestimmt wird. Die dargestellte Information kann hierdurch an verschiedene Nutzeranforderungen flexibel angepasst werden, insbesondere wenn mehrere Nutzer nacheinander die Benutzerschnittstelle bedienen.

Die Grundidee der vorliegenden Erfindung beruht auf dem Konzept einer 2-Seiten-Logik. Dabei existieren zu einer ersten Seite eine zweite Seite, auf der nach einem bestimmten Kriterium, in diesem Fall vom Steuersignal abhängig, verschiedene Informationen zur Anzeige gebracht werden können. Im Allgemeinen kann die erste Seite auch gleichbedeutend als Vorderseite und die zweite Seite als Rückseite bezeichnet werden, wobei zu einer Vorderseite mehrere unterschiedliche Rückseiten existieren.

Vorteilhafterweise wird die Drehung des Objekts von der ersten auf die zweite Seite so durchgeführt, dass die Drehachse oder der Drehpunkt, die zu der Drehung gehören, von dem Steuersignal abhängt. Hierdurch besteht die Möglichkeit, dem Nutzer schon während der Drehung visuell anzudeuten, welches Steuersignal ausgelöst wurde und welche Information auf der zweiten Seite erscheinen wird. Der Nutzer kann hierbei auch intuitiv erkennen, ob das richtige Steuersignal ausgelöst wurde, oder ob es sich gegebenenfalls um eine Fehlauslösung handelt.

In einer Ausgestaltung des erfindungsgemäßen Verfahrens werden mehr als zwei unterschiedliche Steuersignale erkannt und mehr als zwei Rückseiten mit unterschiedlichem Informationsgehalt bereitgestellt. So können beispielsweise vier verschiedene Rückseiten vorgesehen sein, die durch Drehungen des Objekts, falls dieses rechteckig ist, um dessen Mittelpunkt über verschiedene der Ecken oder Kanten dargestellt werden.

Die Drehung kann in einer animierten Form ausgeführt werden, beispielsweise in einer vom Anfangszustand zunächst beschleunigten und dann zum Endzustand wieder abgebremsten Drehbewegung. Vorteilhafte Drehalgorithmen sind in der bereits eingangs zitierten DE 10 2008 034 507 A1 beschrieben.

Ein Steuersignal ist im Sinne der Erfindung ein durch einen Betätigungsvorgang ausgelöstes und von einem Mittel zum Erfassen von Steuersignalen erfasstes physikalisches Signal, das zum Steuern wenigstens eines Verfahrensschrittes des erfindungsgemäßen Verfahrens auf dafür vorgesehenen physikalischen Ressourcen dient. Das erfindungsgemäße erste und zweite Steuersignal kann sich somit auch aus mehreren Steuersignalen zusammensetzen. Es können auch einzelne Merkmale eines Steuersignals zur Steuerung eines einzelnen Verfahrensschritt herangezogen werden. So könnte beispielsweise ein Merkmal des Steuersignals den auf der zweiten Seite anzuzeigenden Informationsgehalt bestimmen und ein anderes Merkmal die Drehachse definieren.

Die Mittel zum Erfassen von Steuersignalen können neben Bedienelementen auch Mittel zur Nutzererkennung umfassen. In einer Weiterbildung des erfindungsgemäßen Verfahrens wird der Nutzer, der das Steuersignal durch einen Betätigungsvorgang ausgelöst hat, erfasst und das Steuersignal dem ersten oder zweiten Steuersignal in Abhängigkeit von dem erfassten Nutzer zugeordnet. Auf diese Weise kann die auf der zweiten Seite dargestellte Information nutzerspezifisch angepasst werden.

Die Nutzererkennung kann auf vielfältige Weise erfolgen. Zum einen kann ein Nutzer oder eine Nutzergruppe durch die Betätigung eines ihm oder ihr zugeordneten Bedienelements identifiziert werden. Das Bedienelement liegt dabei beispielsweise in exklusiver Reichweite dieser Nutzer. Alternativ oder zusätzlich kann die Nutzererkennung durch ein Kamerasystem unterstützt werden.

Ferner können Ort, Winkel oder Richtung, an dem oder aus der ein Betätigungselement in einen um ein Bedienelement gebildeten Detektionsbereich eintritt, bestimmt und einem Nutzer zugeordnet werden. Insbesondere kann in einem Fahrzeug je nach Lokalisierung des Betätigungselements in der linken oder rechten Hälfte des Detektionsbereichs zwischen Fahrer und Beifahrer unterschieden werden. Der jeweilige Nutzer könnte auch ein Betätigungselement benutzen, durch das er sich für das System erkennbar macht, beispielsweise ein Funk-Signalstift, der einen dem Nutzer zuordenbaren Identifikationscode ausstrahlt und systemseitig erfasst werden kann.

Die Nutzererkennung könnte auch durch eine sensorische Erfassung erfolgen, beispielsweise mittels einer Elektrodenanordnung im Sitz des Nutzers. Über diese Elektrodenanordnung kann beispielsweise ein Identifikationscode kapazitiv in den Körper des Fahrers oder Beifahrers eingekoppelt werden. Der Identifikationscode kann dabei die Sitzposition sowie den Nutzer selbst identifizieren. Der Identifikationscode wird über den Körper des Nutzers übertragen und bei der Fingerspitze kapazitiv ausgekoppelt, so dass er beispielsweise an eine systemseitige Empfangseinrichtung übertragen werden kann. Hinsichtlich weiterer Details dieser Signalübertragung wird auf die DE 10 2004 048 956 A1 und die darin zitierte weitere Literatur verwiesen, die hiermit durch Bezugnahme in die vorliegende Anmeldung aufgenommen werden. Es können insbesondere die in der DE 10 2004 048 956 A1 verwendeten Schaltungseinrichtungen Anwendung finden.

In einer vorteilhaften Weiterbildung des erfindungsgemäßen Verfahrens sind zumindest zwei abgegrenzte Bereiche auf der Anzeigefläche definiert. Bei der Betätigung eines dem ersten Bereich zugeordneten Bedienelements wird das erste Steuersignal ausgelöst und bei Betätigung eines dem zweiten Bereich zugeordneten Bedienelements wird das zweite Steuersignal ausgelöst. Typischerweise liegt einer der so definierten Bereiche in der linken und einer in der rechten Hälfte der Anzeigefläche, so dass bei Betätigung des zugeordneten Bedienelements die Drehung des Objekts um die vertikale Mittelachse dem Nutzer den Eindruck vermittelt, als stoße er selber das Objekt auf seiner Seite nach hinten. Die abgegrenzten Bereiche können auch an anderen, vorzugsweise diametral gegenüberliegenden Positionen auf der Anzeigefläche liegen, beispielsweise oben und unten oder im Falle mehrerer solcher Bereiche unten links und rechts sowie oben links und rechts.

Insbesondere weist die Anzeigefläche eine berührungsempfindliche Oberfläche auf und ein Steuersignal wird durch die Betätigung von Schaltflächen innerhalb der jeweiligen definierten Bereiche auf der Anzeigefläche ausgelöst. Alternativ können auch sogenannte Softkeys zum Einsatz kommen, so dass eine Betätigung auch über mechanische Bedienelemente, die kontextspezifisch einem Bereich auf der Anzeigefläche zugeordnet werden, erfolgen kann. Beispielsweise können Fahrer und Beifahrer die Betätigung über Schaltflächen auf der Anzeigefläche vornehmen, während andere Fahrzeuginsassen dies über eine abgesetzte Bedieneinheit mit einem Touchpad oder mechanischen Bedienelementen in ihrer Reichweite vornehmen.

Unter einer Schaltfläche wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar sind. Bei einer Auswahl einer Schaltfläche wird eine ihr zugeordnete Funktion ausgeführt. Die Funktion kann zu einer Veränderung der Informationsanzeige führen. Ferner können über die Schaltflächen Einrichtungen gesteuert werden, deren Bedienung von der Informationsanzeige unterstützt wird. Die Schaltflächen können somit herkömmliche mechanische Schalter ersetzen. Die Schaltflächen können beliebig auf einer frei programmierbaren Anzeigefläche eines Displays erzeugt und angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Die Markierung und/oder Auswahl einer Schaltfläche kann mittels einer Cursorsteuerung oder durch direkte Bedienung einer berührungsempfindlichen Oberfläche des Displays erfolgen.

Wird ein Steuersignal aus mehreren Merkmalen gebildet, so kann die Drehung des Objekts beim Betätigen einer Schaltfläche oder eines anderen Bedienelements gleichzeitig eine Nutzererkennung durchführen. Auf diese Weise könnten manche Inhalte einem bestimmten Personenkreis vorbehalten werden oder für Nutzergruppen gesperrt werden. Beispielsweise könnten Inhalte einem Nutzer in seiner Rolle als Fahrer freigegeben werden, andere Inhalte in seiner Rolle als Fahrzeughalter. Auch könnte auf diese Weise eine Kindersicherung realisiert werden, beispielsweise wenn durch Sitzsensoren oder ein Kamerasystem erkannt wird, dass sich im Fond des Fahrzeugs Kinder befinden.

Typischerweise gehören die auf dem graphischen Objekt dargestellten Informationen zu einem Benutzermenü, wobei auf der ersten Seite Basisfunktionen und/oder Standardeinstellungen angezeigt werden und auf der zweiten Seite nutzerspezifische Funktionen und/oder Detaileinstellungen angezeigt werden. Insbesondere gehört das Benutzermenü zu einer Funktionseinrichtung in einem Fahrzeug. Die Informationen, die auf der zweiten Seite des graphischen Objekts angezeigt werden, wenn das erste Steuersignal ausgelöst wurde, stellen Einstellmöglichkeiten für den Fahrer des Fahrzeugs bereit, und die Informationen, die auf der zweiten Seite des graphischen Objekts angezeigt werden, wenn das zweite Steuersignal ausgelöst wurde, stellen Einstellmöglichkeiten für den Beifahrer des Fahrzeugs bereit.

In einer Ausgestaltung des erfindungsgemäßen Verfahrens ist die Funktionseinrichtung eine Klimaanlage, bei der mehrere Klimasituationen definiert sind, denen Einstellparameter für die Steuerung einzelner Klimasteuerungseinheiten zugeordnet sind. Bei der Auswahl einer bestimmten Klimasituation werden die einzelnen Klimasteuerungseinheiten mit den dieser Klimasituation zugeordneten Einstellparametern gesteuert oder geregelt, wobei auf der ersten Seite des dargestellten flächigen Objekts die Klimasituationen auswählbar sind und auf der zweiten Seite die Einstellparameter nutzerabhängig einstellbar sind. Bei der Anzeige für den Fahrer können Klimaeinstellungen für den Fahrer und bei der Anzeige für den Beifahrer Klimaeinstellungen für den Beifahrer vorgenommen werden. Eine individuelle Einstellung bei Klimaanlagen ist insbesondere deshalb wünschenswert, da einerseits das individuelle Kälte- und Wärmeempfinden sehr unterschiedlich ist und auch von Mensch zu Mensch die Empfindlichkeit gegenüber Luftstrom sehr variabel ist. Andererseits ist eine tages- oder jahreszeitliche Anpassung der Einstellung der Klimaanlage erforderlich. Ferner kann durch die Ausrichtung des Fahrzeugs zur Sonneneinstrahlung und durch die Fahrzeuggeometrie eine sehr unterschiedliche Klimatisierung für jede Sitzposition benötigt werden. Eine Klimabedienung, wie sie auch bei dem erfindungsgemäßen Verfahren verwendet werden kann und die für definierte Klimasituationen spezifische Einstellparameter einzelner Klimasteuerungseinheiten berücksichtigt, ist in der DE 10 2008 017 051 A1 beschrieben.

Das erfindungsgemäße Verfahren kann auch zum Steuern anderer Funktionseinrichtungen vorteilhaft sein, beispielsweise zur akustischen Aussteuerung einer Stereoanlage oder eines Lautsprechersystems.

Die erfindungsgemäße Vorrichtung zum Betreiben einer Benutzerschnittstelle umfasst eine Anzeigefläche zur Darstellung eines flächigen, graphischen Objekts sowie Mittel zum Erzeugen zumindest eines ersten und eines zweiten Steuersignals. Die Vorrichtung umfasst außerdem eine Steuereinrichtung, mit welcher Graphikdaten erzeugbar sind, die zumindest ein auf der Anzeigefläche darstellbares flächiges, graphisches Objekt in einer ersten Darstellung, welche eine erste Seite des Objekts zeigt, und in einer zweiten Darstellung, welche die zweite Seite des Objekts zeigt, darstellen, wobei auf unterschiedlichen Seiten des Objekts verschiedene Informationen darstellbar sind, wobei die Darstellung des graphischen Objekts so veränderbar ist, dass sich das graphische Objekt bei einer perspektivischen Darstellung auf der Anzeigefläche von der ersten Seite auf die zweite Seite dreht, wenn ein erstes oder ein zweites Steuersignal ausgelöst wurde, wobei nach einer Drehung von der ersten Seite auf die zweite Seite in Abhängigkeit davon, ob das erste oder zweite Steuersignal ausgelöst wurde, verschiedene Informationen auf der zweiten Seite darstellbar sind. Die Vorrichtung ist insbesondere zum Durchführen des erfindungsgemäßen Verfahrens geeignet. Sie weist somit auch dieselben Vorteile wie das erfindungsgemäße Verfahren auf.

Die Mittel zum Erzeugen von Steuersignalen können auf verschiedene Weisen realisiert sein. Steuersignale können über manuelle Bedienelemente wie Tasten, Drehdrückstellern oder berührungsempfindliche Flächen, sogenannte Touchpads, erzeugt werden. Diese Bedienelemente eignen sich auch zur Bedienung von Softkeys. Vorteilhafterweise werden Steuersignale über eine Anzeigefläche mit einer berührungsempfindlichen Oberfläche erzeugt, bei der einem Nutzer Schaltflächen angezeigt werden, die durch Berührung oder Annäherungserfassung ausgelöst werden. Die Mittel zum Erzeugen von Steuersignalen können durch diverse Erfassungsmittel zur Nutzererkennung unterstützt werden, die insbesondere Sensornetze, Funkidentifikationssysteme oder Kamerasysteme umfassen können.

Erfindungsgemäß stellt die Vorrichtung zum Betreiben einer Benutzerschnittstelle eine Benutzerschnittstelle einer Klimaanlage in einem Fahrzeug bereit.

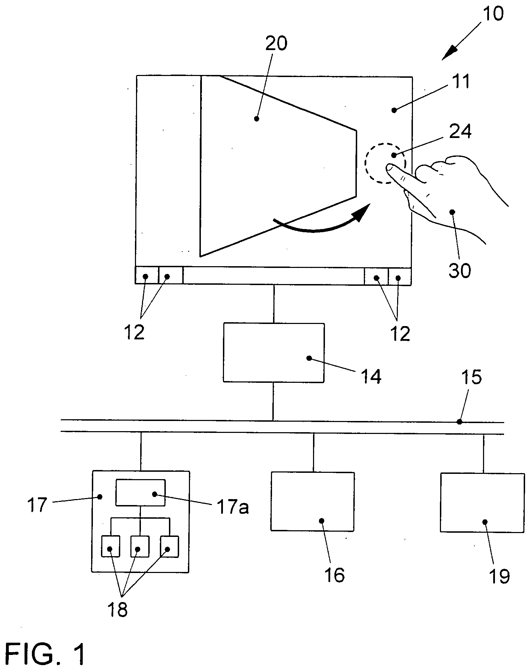

In der Figur 1 ist schematisch der Aufbau eines Ausführungsbeispiels der erfindungsgemäßen Vorrichtung 10 zum Bereitstellen einer Benutzerschnittstelle dargestellt. Sie umfasst eine Anzeigefläche 11, auf der graphische Objekte 20 angezeigt werden können. Am unterem Rand der Anzeigefläche 11 sind mechanische Bedienelemente 12 angebracht. Die Anzeigefläche 11 ist mit einer berührungsempfindlichen Oberfläche ausgestattet, so dass eine Berührung eines Nutzers 30, beispielsweise mit seiner Fingerspitze, in einem abgegrenzten Bereich 24 erfassbar ist.

Die Anzeigefläche 11 und die Bedienelemente 12 sind mit einer Steuereinrichtung 14 verbunden, so dass über die Bedienelemente 12 oder die berührungsempfindliche Oberfläche ausgelöste Steuersignale an die Steuereinrichtung 14 übertragen werden und die Anzeigeinhalte auf der Anzeigefläche 11 gesteuert werden können.

Die Steuereinrichtung 14 ist ferner über einen Datenbus 15 im Fahrzeug mit einer Klimaanlage 17 und einer anderen Funktionseinrichtungen 16, beispielsweise einer Infotainmenteinrichtung oder einem Navigationssystem, verbunden. Die Klimaanlage 17 umfasst diverse Klimatisierungseinheiten 18, z.B. Lüftungs-, Kühl- und Heizelemente in den Sitzflächen- und lehnen sowie integriert in das Cockpit und die Inneneinrichtung des Fahrzeugs. Die einzelnen Klimatisierungseinheiten 18 sind über das Steuerteil 17a der Klimaanlage 17 separat ansteuerbar. Die Steuereinrichtung 14 ist außerdem über den Fahrzeugbus 15 mit Erfassungsmitteln 19 zur Nutzererkennung verbunden, über die eine Zuordnung eines Nutzer als Fahrer oder Beifahrer und/oder eine Fahrzeuginsassenidentifikation durchgeführt werden kann. Die Erfassungsmittel 19 zur Nutzererkennung sind an sich bekannt. Sie sind insbesondere als Kamerasystem oder Sensoranordnung in den Sitzen des Fahrzeugs ausgestaltet.

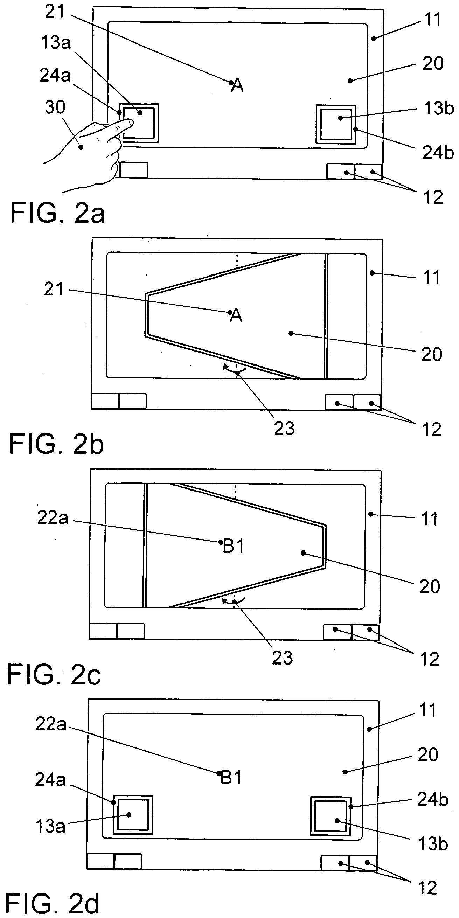

Die Darstellung eines flächigen, graphischen Objekts 20 gemäß einem Ausführungsbeispiel des erfindungsgemäßen Verfahrens nach Auslösen eines ersten Steuersignals wird nun anhand der Figuren 2a - 2d beschrieben. Auf der Anzeigefläche 11 mit der berührungsempfindlichen Oberfläche ist ein graphisches Objekt 20 dargestellt, das durch von einem Nutzer 30 ausgelöste Steuersignale verändert werden kann. Die Anzeigefläche 11 sei hier in die Bedienkonsole im Cockpit des Fahrzeugs in der Mitte zwischen Fahrer und Beifahrer integriert. Die linke Hälfte der Anzeigefläche 11 liegt somit besonders günstig, um vom Fahrer bedient zu werden, die rechte Hälfte kann entsprechend leicht vom Beifahrer bedient werden.

In Figur 2a wird das flächige Objekt 20 von einer ersten Seite 21 dargestellt, die fortan als Vorderseite bezeichnet wird (die später dargestellten zweiten Seiten 22a, 22b werden entsprechend als Rückseiten bezeichnet). Links und rechts unten auf der Vorderseite 21 sind je ein abgegrenzter Bereich 24a, 24b definiert, in dem je eine Schaltfläche 13a bzw. 13b dargestellt wird. Der Bereich 24a ist besonders komfortabel von der Fahrerseite aus zu bedienen, der Bereich 24b von der Beifahrerseite aus.

Berührt nun der Nutzer 30, hier also der Fahrer, mit einem Betätigungselement, hier seiner Fingerspitze, die Schaltfläche 13a in dem Bereich 24a, so wird ein erstes Steuersignal erzeugt, das dem Fahrer des Fahrzeugs zugeordnet wird. Die Darstellung des graphischen Objekts 20 wird nun so verändert, dass sich das graphische Objekt 20 bei einer perspektivischen Darstellung auf der Anzeigefläche 11 von der Vorderseite 21 auf die Rückseite 22a um eine Drehachse 23 dreht, die durch die vertikale Mittelachse gebildet wird. Diese Drehung erfolgt, indem sich die linke Objekthälfte virtuell nach hinten bewegt, wie in den Figuren 2b und 2c dargestellt. Für dieses Steuersignal werden auf der Rückseite 22a Informationen (B1) angezeigt, die dem Fahrer, der das erste Steuersignal ausgelöst hat, zugeordnet sind. Wenn die Drehung vollzogen ist, können gemäß Figur 2d wieder Schaltflächen 13a, 13b in abgegrenzten Bereichen 24 angezeigt werden, über die beispielsweise eine erneute Drehung auf die Vorderseite 21 (nicht gezeigt) ausgelöst werden könnten. Das Anzeigen je einer Schaltfläche 13a bzw. 13b für den Fahrer und Beifahrer hat in Figur 2d den Vorteil, dass beide Nutzer bequem zurück auf die Vorderseite wechseln können. Alternativ wäre auch eine Beschränkung auf eine Schaltfläche für den jeweils aktuellen Nutzer möglich.

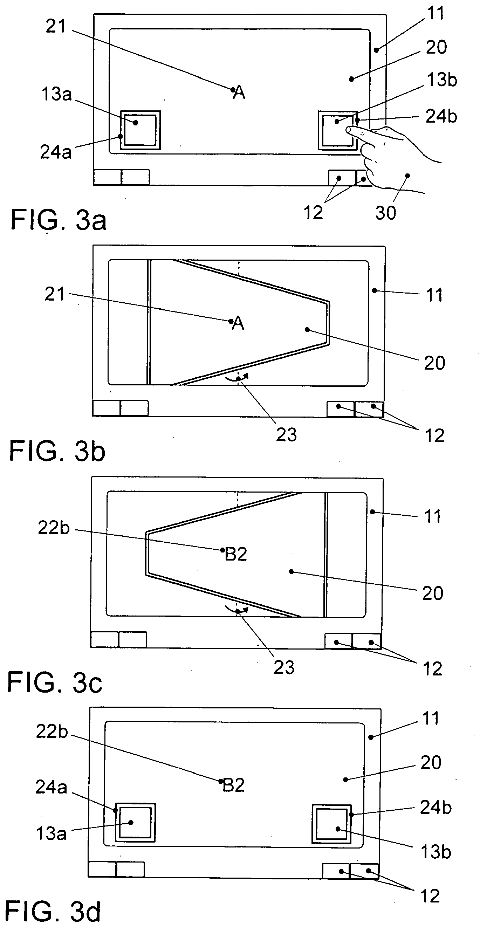

In den Figuren 3a - 3d ist die Darstellung eines graphischen Objekts gemäß dem Ausführungsbeispiel des erfindungsgemäßen Verfahrens nach Figur 2a - 2d gezeigt, bei dem anstelle des ersten Steuersignals ein zweites Steuersignal ausgelöst wurde.

In diesem Falle berührt nun ein Nutzer 30, hier also der Beifahrer, mit seiner Fingerspitze die Schaltfläche 13b in dem Bereich 24b. Es kann sich um denselben Nutzer 30 oder eine andere Person handeln. Ausschlaggebend ist hier die neue Rolle als Beifahrer, die aus der Betätigung der Schaltfläche 13b in dem Bereich 24b geschlossen wurde. Es wird ein zweites Steuersignal erzeugt, das dem Beifahrer des Fahrzeugs zugeordnet wird. Die Darstellung des graphischen Objekts 20 wird diesmal so verändert, dass sich das graphische Objekt 20 bei einer perspektivischen Darstellung auf der Anzeigefläche 11 von der Vorderseite 21 auf die Rückseite 22b um die zuvor beschriebene Drehachse 23 dreht, und zwar diesmal mit der rechten Objekthälfte nach hinten, wie in den Figuren 3b und 3c dargestellt. Für dieses Steuersignal werden auf der Rückseite 22b Informationen (B2) angezeigt, die dem Beifahrer, der das zweite Steuersignal ausgelöst hat, zugeordnet sind.

Alternativ könnten Steuersignale auch durch die Betätigung eines Bedienelements 12 erzeugt werden, wobei einzelne Bedienelemente 12 einzelnen Nutzern 30 zugeordnet sein können. Die Bedienelemente 12 müssen dabei nicht an der Anzeigefläche 11 angebracht sein, sondern können an beliebiger Stelle im Fahrzeug befestigt sein (nicht dargestellt), beispielsweise in den Armlehnen oder hinten in den Rückenlehnen der Vordersitze, so dass eine Verwendung in Fahrzeugen mit mehreren Sitzreihen aber nur einer Anzeigefläche möglich ist. Insbesondere können vier Rückseiten zur Verfügung gestellt werden, deren Anzeige durch ein Steuersignal von je einer Sitzposition im Fahrzeug vorne rechts und links sowie hinten rechts und links erreicht wird. Die Drehung von der Vorderseite zu der jeweiligen Rückseite könnte entsprechend von deren Mittelpunkt über eine der Ecken oben rechts und links sowie unten rechts und links, um eine horizontale und eine vertikale Mittelachse in der einen und der anderen Drehrichtung oder um die beiden Diagonalen in der einen und der anderen Drehrichtung erfolgen.

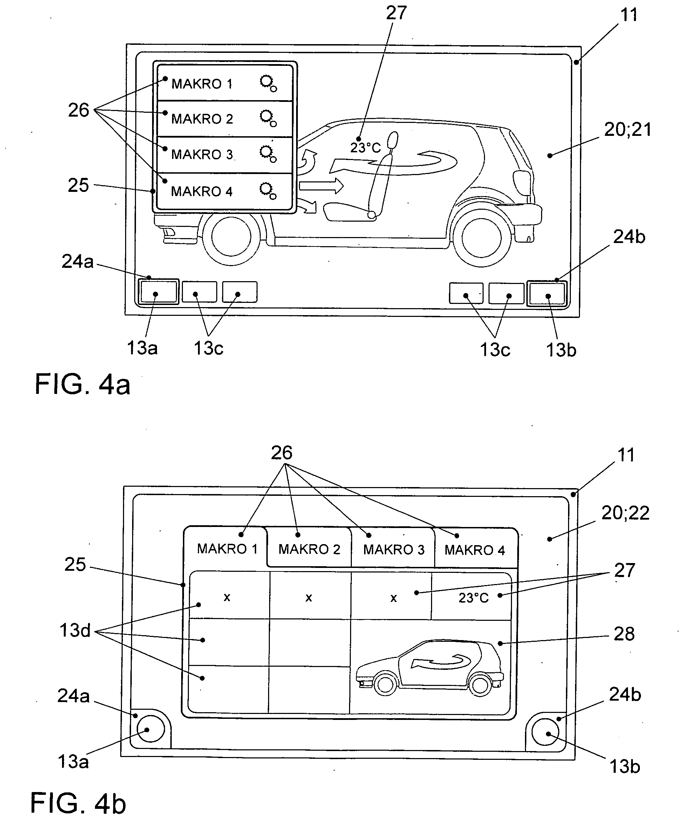

in den Figuren 4a und 4b ist ein weiteres Ausführungsbeispiel zum erfindungsgemäßen Verfahren gezeigt, bei dem graphische Objekte 20 für die Bereitstellung eines Benutzermenüs 25, hier für eine Klimaanlage 17 in einem Fahrzeug, genutzt werden. Dabei sind auf der Vorderseite 21 die Bedienung von Basisfunktionen und Standardeinstellungen vorgesehen, während auf verschiedenen Rückseiten 22 nutzerspezifische Detaileinstellungen vorgenommen werden können. Die Darstellung der Drehung sowie der Algorithmus, dass in Abhängigkeit von dem Steuersignal unterschiedliche Informationen auf der Rückseite 22 angezeigt werden, kann beispielsweise gemäß der Beschreibung zu den Figuren 2a - 2d und 3a - 3d durchgeführt werden.

Für das Benutzermenü 25 sind mehrere Klimasituationen 26 definiert, die gemäß Figur 4a auf der Vorderseite 21 des Benutzermenüs 25 angezeigt werden. Diese Klimasituationen 26 sind beispielsweise in einem Speicher der Steuereinrichtung 14 oder der Klimaanlage 17 gespeichert. Bei dem beschriebenen Ausführungsbeispiel betreffen die Klimasituationen 26 die klimatischen Verhältnisse zu verschiedenen Zeitpunkten, beispielsweise an einem Wintermorgen oder an einem Sommermittag. Die Klimasituationen 26 definieren typische Nutzungssituationen, wie sie beim Betrieb des Fahrzeugs auftreten. Den jeweiligen Klimasituationen 26 sind Einstellparameter 27 für die Steuerung der einzelnen Klimasteuerungseinheiten 18 zugeordnet. Die Einstellparameter 27 und die Zuordnung zu der entsprechenden Klimasituation 26 sind auch in dem Speicher der Steuereinrichtung 14 oder der Klimaanlage 17 gespeichert. Einer Klimasituation 26 sind somit als Funktionsmakro mehrere Einstellparameter 27 für die einzelnen Klimasteuerungseinheiten 18 der Klimaanlage 17 zugeordnet. Durch die Auswahl einer bestimmten Klimasituation 26 kann somit eine Vielzahl von Einstellparametern 27 für die Klimasteuerungseinheiten 18 gleichzeitig eingestellt werden.

Für die Auswahl der einzelnen Klimasituationen 26 wird auf der Anzeigefläche 11 die in Figur 4a gezeigte Vorderseite 21 des graphischen Objekts 20 dargestellt. Die gezeigte Darstellung umfasst verschiedene Schaltflächen 13a, 13b und 13c, die durch Berührung der Anzeigefläche 11 betätigt werden können. Die Schaltflächen 13a und 13b liegen je in einem abgegrenzten Bereich 24a und 24b, über die wie bereits beschrieben ein Steuersignal zum Durchführen der erfindungsgemäßen Objektdrehung erzeugt werden kann. Die Schaltflächen 13c haben keine Relevanz für die Drehung und sind an sich bekannte Hard- oder Softkeys. Sie können beispielsweise der Einstellung einer Temperaturvorwahl für Fahrer und Beifahrer dienen, oder auch den Klimasituationen 26 zugeordnet sein. Alternativ können die angezeigten Klimasituationen 26 selber als Schaltflächen ausgestaltet sein, und eine entsprechende Klimasituation 26 durch einfaches Berühren der betreffenden Stelle der Anzeigefläche 11 ausgewählt werden. Außerdem können entsprechende Basisinformationen, beispielsweise Einstellparameter 27 wie die Solltemperierung, angezeigt werden. Dies reduziert die Bedienung der Klimaanlage 17 auf das Wesentliche und ermöglicht eine sehr übersichtliche Bedienbarkeit für Standardsituationen.

Löst nun ein Nutzer ein Steuersignal gemäß dem zuvor beschriebenen Verfahren aus, indem er beispielsweise eine der Schaltflächen 13a oder 13b berührt, so dreht sich die Vorderseite 21 des Benutzermenüs 25 in Abhängigkeit von dem Steuersignal auf eine Rückseite 22, deren Inhalt von dem Steuersignal abhängt. Insbesondere werden auf der Rückseite 22 Detaileinstellungen zur Verfügung gestellt, über die ein Nutzer nur die ihn betreffenden Klimatisierungseinstellungen bedienen kann, beispielsweise nur für seinen Sitz oder nur für einen um seine Sitzposition gebildeten Bereich.

In Figur 4b ist die Rückseite 22 des graphischen Objekts 20 für die Bereitstellung eines Benutzermenüs 25 dargestellt, welche nach Betätigung der Schaltfläche 13a oder 13b angezeigt wird. Die verschiedenen Rückseiten 22 unterscheiden sich in diesem Ausführungsbeispiel nicht in ihrer Struktur, sondern nur in den Einstellparametern 27, weshalb auf eine Darstellung alternativer Rückseiten 22 verzichtet wird. Die bereits auf der Vorderseite 21 dargestellten Klimasituationen 26 sind in Form eines Reiterkartenmenüs mit den dazugehörigen Einstellparametern 27 dargestellt, über welche der betreffende Nutzer die ihn betreffenden und den Klimasituationen 26 zugeordneten Einstellparameter 27 manuell verändern kann. Die Einstellparameter 27 sind dabei als Schaltflächen 13d auf dem Reiterkartenmenü auswählbar. Der Nutzer kann insbesondere die Solltemperierung und Luftzufuhr für den Bereich seines Sitzes individuell einstellen, wobei über ein Zusatzfenster 28 relevante Einstellparameter 27 und Klimatisierungseinheiten 18 visualisiert werden können. Über eine Schaltfläche 13a oder 13b gelangt der Nutzer zurück zur Vorderseite 21.

Das beschriebene Verfahren ermöglicht insbesondere die Feinabstimmung individueller Einstellparameter 27 in der Klimaanlage 17. Dabei ist nicht nur die Anpassung an eine feste Klimasituation 26 realisierbar, sondern es kann damit auch ein Customizing mittels Makroeinstellungen durchgeführt werden, um dem Kundenwunsch nach länder- oder klimaspezifischen Anpassungen oder Ausstattungsvarianten Rechnung zu tragen, ohne dabei die Anzahl der Bedienelemente oder das Bedienkonzept unnötig zu verkomplizieren. Hierdurch wird die Kundenakzeptanz und der Bedienkomfort erhöht und damit ein Beitrag zur Sicherheit im Straßenverkehr geleistet.

Analog zu dem in den Figuren 4a und 4b gezeigten Benutzermenü 25 können mit dem erfindungsgemäßem Verfahren und der erfindungsgemäßer Vorrichtung verschiedenste Funktionseinrichtungen 16, insbesondere in einem Fahrzeug, bedient werden.

### Bezugszeichenliste

- 10: Vorrichtung zum Betreiben einer Benutzerschnittstelle
- 11: Anzeigefläche
- 12: Bedienelement
- 13a,b: Schaltflächen
- 13c,d: weitere Schaltflächen
- 14: Steuereinrichtung
- 15: Datenbus
- 16: Funktionseinrichtung
- 17: Klimaanlage
- 17a: Steuerteil der Klimaanlage
- 18: Klimatisierungseinrichtung
- 19: Erfassungsmittel zur Nutzererkennung
- 20: graphisches Objekt
- 21: erste Seite
- 22a,b: zweite Seite
- 23: Drehachse
- 24a,b: abgegrenzter Bereich
- 25: Benutzermenü
- 26: Klimasituation
- 27: Einstellparameter
- 28: Zusatzfenster
- 30: Nutzer

## Patentansprüche

1. Verfahren zum Betreiben einer Benutzerschnittstelle, bei dem
- zumindest ein flächiges, graphisches Objekt (20) in einer ersten Darstellung, welche eine erste Seite (21) des Objekts (20) zeigt, und in einer zweiten Darstellung, welche die zweite Seite (22a, 22b) des Objekts zeigt, auf einer Anzeigefläche (11) dargestellt wird,
- wobei auf unterschiedlichen Seiten (21, 22) des Objekts (20) verschiedene Informationen dargestellt werden und
- die Darstellung des graphischen Objekts (20) so verändert wird, dass sich das graphische Objekt (20) bei einer perspektivischen Darstellung auf der Anzeigefläche (11) von der ersten Seite (21) auf die zweite Seite (22) dreht, wenn ein erstes oder ein zweites Steuersignal ausgelöst wurde,
**dadurch gekennzeichnet, dass**
- nach einer Drehung von der ersten Seite (21) auf die zweite Seite (22) in Abhängigkeit davon, ob das erste oder zweite Steuersignal ausgelöst wurde, verschiedene Informationen auf der zweiten Seite (22a, 22b) dargestellt werden, wobei die auf dem graphischen Objekt (20) dargestellten Informationen zu einem Benutzermenü (25) gehören und wobei auf der ersten Seite Basisfunktionen und/oder Standardeinstellungen angezeigt werden und auf der zweiten Seite nutzerspezifische Funktionen angezeigt werden.

2. Verfahren nach Anspruch 1,
**dadurch gekennzeichnet,**
**dass** die Drehachse (23) oder der Drehpunkt, die zu der Drehung gehören, von dem Steuersignal abhängt.

3. Verfahren nach Anspruch 1 oder 2,
**dadurch gekennzeichnet,**
**dass** der Nutzer (30), der das Steuersignal durch einen Betätigungsvorgang ausgelöst hat, erfasst wird, und das Steuersignal dem ersten oder zweiten Steuersignal in Abhängigkeit von dem erfassten Nutzer (30) zugeordnet wird.

4. Verfahren nach Anspruch 1 bis 3,
**dadurch gekennzeichnet,**
**dass** zumindest zwei abgegrenzte Bereiche (24a, 24b) auf der Anzeigefläche (11) definiert sind und dass bei der Betätigung eines dem ersten Bereich (24a) zugeordneten Bedienelements (13a; 12) das erste Steuersignal ausgelöst wird und bei Betätigung eines dem zweiten Bereich (24b) zugeordneten Bedienelements (13b; 12) das zweite Steuersignal ausgelöst wird.

5. Verfahren nach Anspruch 4,
**dadurch gekennzeichnet, dass**
- die Anzeigefläche (11) eine berührungsempfindliche Oberfläche aufweist und
- ein Steuersignal durch die Betätigung von Schaltflächen (13a; 13b) innerhalb der jeweiligen definierten Bereiche (24a; 24b) auf der Anzeigefläche (11) ausgelöst wird.

6. Verfahren nach Anspruch 1,
**dadurch gekennzeichnet, dass**
- das Benutzermenü (25) zu einer Funktionseinrichtung (16) in einem Fahrzeug gehört und
- die Informationen, die auf der zweiten Seite (22a) des graphischen Objekts (20) angezeigt werden, wenn das erste Steuersignal ausgelöst wurde, Einstellmöglichkeiten für den Fahrer des Fahrzeugs bereitstellen, und die Informationen, die auf der zweiten Seite (22b) des graphischen Objekts (20) angezeigt werden, wenn das zweite Steuersignal ausgelöst wurde, Einstellmöglichkeiten für den Beifahrer des Fahrzeugs bereitstellen.

7. Verfahren nach Anspruch 6,
**dadurch gekennzeichnet, dass**
- die Funktionseinrichtung (16) eine Klimaanlage (17) ist, bei der mehrere Klimasituationen (26) definiert sind, denen Einstellparameter (27) für die Steuerung einzelner Klimasteuerungseinheiten (18) zugeordnet sind, und
- bei der Auswahl einer bestimmten Klimasituation (26) die einzelnen Klimasteuerungseinheiten (18) mit den dieser Klimasituation (26) zugeordneten Einstellparametern (27) gesteuert oder geregelt werden,
- wobei auf der ersten Seite (21) des dargestellten flächigen Objekts (20) die Klimasituationen (26) auswählbar sind und auf der zweiten Seite (22a, b) die Einstellparameter (27) nutzerabhängig einstellbar sind.

8. Vorrichtung (10) zum Betreiben einer Benutzerschnittstelle, umfassend
- eine Anzeigefläche (11) zur Darstellung eines flächigen, graphischen Objekts (20),
- Mittel (12; 13a; 13b) zum Erzeugen zumindest eines ersten und eines zweiten Steuersignals,
- eine Steuereinrichtung (14), mit welcher Graphikdaten erzeugbar sind, die zumindest ein auf der Anzeigefläche (11) darstellbares flächiges, graphisches Objekt (20) in einer ersten Darstellung, welche eine erste Seite (21) des Objekts (20) zeigt, und in einer zweiten Darstellung, welche die zweite Seite (22a, 22b) des Objekts (20) zeigt, darstellen, wobei auf unterschiedlichen Seiten (21, 22) des Objekts (20) verschiedene Informationen darstellbar sind,
- wobei die Darstellung des graphischen Objekts (20) so veränderbar ist, dass sich das graphische Objekt (20) bei einer perspektivischen Darstellung auf der Anzeigefläche (11) von der ersten Seite (21) auf die zweite Seite (22) dreht, wenn ein erstes oder ein zweites Steuersignal ausgelöst wurde,
**dadurch gekennzeichnet, dass**
- nach einer Drehung von der ersten Seite (21) auf die zweite Seite (22) in Abhängigkeit davon, ob das erste oder zweite Steuersignal ausgelöst wurde, verschiedene Informationen auf der zweiten Seite (22a, 22b) darstellbar sind, wobei die auf dem graphischen Objekt (20) dargestellten Informationen zu einem Benutzermenü (25) gehören und wobei auf der ersten Seite Basisfunktionen und/oder Standardeinstellungen angezeigt werden und auf der zweiten Seite nutzerspezifische Funktionen angezeigt werden.

9. Vorrichtung nach Anspruch 8,
**dadurch gekennzeichnet,**
**dass** die Vorrichtung (10) eine Benutzerschnittstelle einer Klimaanlage (17) in einem Fahrzeug bereitstellt.

## Claims

1. Method for operating a user interface, in which
- at least one two-dimensional, graphical object (20) is presented on a display panel (11) in a first presentation, which shows a first side (21) of the object (20), and in a second presentation, which shows the second side (22a, 22b) of the object,
- wherein different sides (21, 22) of the object (20) are used to present different information, and
- the presentation of the graphical object (20) is altered such that the graphical object (20) is rotated from the first side (21) to the second side (22) in a perspective presentation on the display panel (11) when a first or a second control signal has been triggered,
**characterized in that**
- a rotation from the first side (21) to the second side (22) is followed by different information being presented on the second side (22a, 22b) on the basis of whether the first or the second control signal has been triggered, wherein the information presented on the graphical object (20) is associated with a user menu (25) and wherein the first side is used to display basic functions and/or standard settings and the second side is used to display user-specific functions.

2. Method according to Claim 1,
**characterized**
**in that** the axis of rotation (23) or the center of rotation, which are associated with the rotation, is dependent on the control signal.

3. Method according to Claim 1 or 2,
**characterized**
**in that** the user (30) who has triggered the control signal by means of an operating event is sensed and the control signal is associated with the first or the second control signal on the basis of the sensed user (30) .

4. Method according to Claims 1 to 3,
**characterized**
**in that** at least two delimited areas (24a, 24b) are defined on the display panel (11) and in that operation of an operator control element (13a; 12) associated with the first area (24a) prompts the first control signal to be triggered and operation of an operator control element (13b; 12) associated with the second area (24b) prompts the second control signal to be triggered.

5. Method according to Claim 4,
**characterized in that**
- the display panel (11) has a touch-sensitive surface, and
- a control signal is triggered by the operation of buttons (13a; 13b) within the respective defined areas (24a; 24b) on the display panel (11).

6. Method according to Claim 1,
**characterized in that**
- the user menu (25) is associated with a functional device (16) in a vehicle, and
- the information which is displayed on the second side (22a) of the graphical object (20) when the first control signal has been triggered provides setting options for the driver of the vehicle, and the information which is displayed on the second side (22b) of the graphical object (20) when the second control signal has been triggered provides setting options for the front-seat passenger of the vehicle.

7. Method according to Claim 6,
**characterized in that**
- the functional device (16) is an air conditioning system (17) for which a plurality of air conditioning situations (26) has been defined which have associated setting parameters (27) for controlling individual air conditioning control units (18), and
- the selection of a particular air conditioning situation (26) prompts the individual air conditioning control units (18) to be controlled or regulated using the setting parameters (27) which are associated with this air conditioning situation (26),
- wherein the first side (21) of the presented two-dimensional object (20) allows the air conditioning situations (26) to be selected and the second side (22a, b) allows the setting parameters (27) to be adjusted on a user-dependent basis.

8. Apparatus (10) for operating a user interface, comprising
- a display panel (11) for presenting a two-dimensional, graphical object (20),
- means (12; 13a, 13b) for producing at least a first and a second control signal,
- a control device (14) which can be used to produce graphics data which present at least one two-dimensional, graphical object (20) which can be presented on the display panel (11) in a first presentation, which shows a first side (21) of the object (20), and in a second presentation, which shows the second side (22a, 22b) of the object (20), wherein different sides (21, 22) of the object (20) can be used to present different information,
- wherein the presentation of the graphical object (20) can be altered such that the graphical object (20) is rotated from the first side (21) to the second side (22) in a perspective presentation on the display panel (11) when a first or a second control signal has been triggered,
**characterized in that**
- a rotation from the first side (21) to the second side (22) is followed by different information being able to be presented on the second side (22a, 22b) on the basis of whether the first or the second control signal has been triggered, wherein the information presented on the graphical object (20) is associated with a user menu (25) and wherein the first side is used to display basic functions and/or standard settings and the second side is used to display user-specific functions.

9. Apparatus according to Claim 8,
**characterized**
**in that** the apparatus (10) provides a user interface for an air conditioning system (17) in a vehicle.

## Revendications

1. Procédé d'exploitation d'une interface utilisateur, dans lequel
- au moins un objet graphique bidimensionnel (20) est représenté sur une surface d'affichage (11) dans une première représentation, laquelle montre un premier côté (21) de l'objet (20), et dans une deuxième représentation, laquelle montre le deuxième côté (22a, 22b) de l'objet,
- dans lequel des informations différentes sont représentées sur des côtés (21, 22) différents de l'objet (20) et
- la représentation de l'objet graphique (20) est modifiée de telle sorte que l'objet graphique (20), dans le cas d'une représentation en perspective sur la surface d'affichage (11), effectue une rotation du premier côté (21) vers le deuxième côté (22) lorsqu'un premier ou un deuxième signal de commande a été déclenché,
**caractérisé en ce que**
- après une rotation du premier côté (21) vers le deuxième côté (22) selon que le premier ou le deuxième signal de commande a été déclenché, des informations différentes sont représentées sur le deuxième côté (22a, 22b), dans lequel les informations représentées sur l'objet graphique (20) appartiennent à un menu utilisateur (25) et dans lequel des fonctions de base et/ou des réglages standard sont affichés sur le premier côté et des fonctions spécifiques de l'utilisateur sont affichées sur le deuxième côté.

2. Procédé selon la revendication 1,
**caractérisé en ce que** l'axe de rotation (23) ou le centre de rotation, qui appartiennent à la rotation, dépendent du signal de commande.

3. Procédé selon la revendication 1 ou 2,
**caractérisé en ce que** l'utilisateur (30) ayant déclenché le signal de commande par un processus d'actionnement est détecté et **en ce que** le signal de commande est associé au premier ou au deuxième signal de commande en fonction de l'utilisateur (30) détecté.

4. Procédé selon les revendications 1 à 3,
**caractérisé en ce qu'**au moins deux régions adjacentes (24a, 24b) sont définies sur la surface d'affichage (11) et **en ce que** le premier signal de commande est déclenché lors de l'actionnement d'un élément de commande (13a ; 12) associé à la première région (24a) et **en ce que** le deuxième signal de commande est déclenché lors de l'actionnement d'un élément de commande (13b ; 12) associé à la deuxième région (24b).

5. Procédé selon la revendication 4,
**caractérisé en ce que**
- la surface d'affichage (11) présente une surface tactile et
- un signal de commande est déclenché par l'actionnement de surfaces de commutation (13a ; 13b) à l'intérieur de la région (24a ; 24b) respectivement définie sur la surface d'affichage (11).

6. Procédé selon la revendication 1,
**caractérisé en ce que**
- le menu utilisateur (25) appartient à un dispositif fonctionnel (16) dans un véhicule, et
- des informations qui sont affichées sur le deuxième côté (22a) de l'objet graphique (20), lorsque le premier signal de commande a été déclenché, offrent au conducteur du véhicule des possibilités de réglage et les informations qui sont affichées sur le deuxième côté (22b) de l'objet graphique (20) offrent au passager du véhicule des possibilités de réglage lorsque le deuxième signal de commande a été déclenché.

7. Procédé selon la revendication 6,
**caractérisé en ce que**
- le dispositif fonctionnel (16) est un climatiseur (17) dans lequel de multiples situations de climatisation (26) sont définies, auxquelles sont associés des paramètres de réglage (27) destinés à commander des unités de climatisation individuelles (18), et
- lors de la sélection d'une situation de climatisation déterminée (26), les unités de climatisation individuelles (18) sont commandées ou régulées en utilisant les paramètres de réglage (27) associés à ladite situation de climatisation (26),
- dans lequel les situations de climatisation (26) peuvent être sélectionnées sur le premier côté (21) de l'objet (20) plan représenté et les paramètres de réglage (27) peuvent être réglés en fonction de l'utilisateur sur le deuxième côté (22a, b).

8. Dispositif (10) d'exploitation d'une interface utilisateur, comprenant
- une surface d'affichage (11) destinée à représenter un objet graphique (20) plan,
- des moyens (12 ; 13a ; 13b) destinés à générer au moins des premier et deuxième signaux de commande,
- un dispositif de commande (14) au moyen duquel des données graphiques peuvent être générées, lesquelles représentent au moins un objet graphique (20) plan pouvant être représenté sur la surface d'affichage (11) dans une première représentation, laquelle montre un premier côté (21) de l'objet (20), et dans une deuxième représentation, laquelle montre le deuxième côté (22a, 22b) de l'objet (20), dans lequel différentes informations peuvent être représentées sur des côtés (21, 22) différents de l'objet (20),
- dans lequel la représentation de l'objet graphique (20) peut être modifiée de telle sorte que l'objet graphique (20), dans le cas d'une représentation en perspective sur la surface d'affichage (11), effectue une rotation du premier côté (21) vers le deuxième côté (22) lorsqu'un premier ou un deuxième signal de commande a été déclenché,
**caractérisé en ce que**
- après une rotation du premier côté (21) vers le deuxième côté (22) selon que le premier ou le deuxième signal de commande a été déclenché, des informations différentes peuvent être représentées sur le deuxième côté (22a, 22b), dans lequel les informations représentées sur l'objet graphique (20) appartiennent à un menu utilisateur (25) et dans lequel des fonctions de base et/ou des réglages standard sont affichés sur le premier côté et des fonctions spécifiques de l'utilisateur sont affichées sur le deuxième côté.

9. Dispositif selon la revendication 8, **caractérisé en ce que** le dispositif (10) fournit une interface utilisateur d'une climatisation (17) dans un véhicule.
